# EUROPÄISCHE PATENTSCHRIFT

(11) **EP 0 505 539 B1**
(45) Veröffentlichungstag und Bekanntmachung des Hinweises auf die Patenterteilung: **24.04.1996**
(21) Anmeldenummer: 91917783.2
(22) Anmeldetag: 10.10.1991
(51) Int. Cl.: B60T 8/40, B60T 8/42

(54) **BREMSDRUCKREGELVORRICHTUNG FÜR EINE HYDRAULISCHE KRAFTFAHRZEUGBREMSANLAGE**
BRAKE PRESSURE REGULATOR FOR HYDRAULIC MOTOR VEHICLE BRAKING SYSTEMS
REGULATEUR DE LA PRESSION DES FREINS POUR SYSTEMES HYDRAULIQUES DE FREINAGE DE VEHICULES A MOTEUR

(30) Priorität: 16.10.1990 DE 4032797; 16.09.1991 DE 4130729
(43) Veröffentlichungstag der Anmeldung: 30.09.1992
(73) Patentinhaber: ITT Automotive Europe GmbH, D-60488 Frankfurt (DE)
(72) Erfinder: VOLZ, Peter, D-6100 Darmstadt (DE); SCHOPPER, Bernd, D-6239 Kriftel (DE)
(86) Internationale Anmeldenummer: EP9101924
(87) Internationale Veröffentlichungsnummer: WO9206874

(56) Entgegenhaltungen:
- EP-A- 0 110 539
- EP-A- 0 327 218
- EP-A- 0 332 398
- DE-A- 2 336 118
- DE-C- 3 439 408
- PATENT ABSTRACTS OF JAPAN vol. 13, no. 223 (M-829)(3571) 24. Mai 1989 & JP,A,01 036 548 ( SUMITOMO ELECTRIC IND. ) 7. Februar 1989 siehe Zusammenfassung

## Beschreibung

Die Erfindung betrifft eine Bremsdruckregelvorrichtung für eine hydraulische Kraftfahrzeugbremsanlage mit einem Bremsdruckgeber, mindestens einem mit dem Bremsdruckgeber über eine Bremsleitung verbundenen Radbremszylinder zum Betätigen einer Bremse, einem Bremsdrucksteuerkreis, der zwischen dem Bremsdruckgeber und dem Radbremszylinder in die Bremsleitung geschaltet ist und eine Kolbenpumpe, deren Auslaß mit der Bremsleitung verbindbar ist, und Steuerventile aufweist, die durch eine Regeleinrichtung steuerbar sind und den Radbremszylinder mit der Bremsleitung oder mit einer zum Einlaß der Kolbenpumpe führenden Rücklaufleitung verbinden, wobei ein durch ein mechanisches Getriebe axial bewegbarer Kolben der Kolbenpumpe mittels einer Gleitdichtung gegenüber der Zylinderbohrung im Pumpengehäuse abgedichtet ist.

Bremsdruckregelvorrichtungen der angegebenen Art dienen zur automatischen Regelung des Bremsdrucks in Abhängigkeit von der durch eine Überwachungseinrichtung beobachteten Drehbewegung eines oder mehrerer Räder eines Fahrzeugs, um das Blockieren der Räder beim Bremsvorgang und gegebenenfalls auch ein Durchdrehen der angetriebenen Räder beim Anfahren zu vermeiden.

Eine Bremsdruckregelvorrichtung der angegebenen Art ist aus der US-PS 4,715,666 bekannt. Bei einer derartigen Bremsdruckregelvorrichtung wird zur Reduzierung des Bremsdrucks im Radbremszylinder die zum Radbremszylinder führende Bremsleitung durch Öffnen eines elektromagnetischen Steuerventils mit der Rücklaufleitung verbunden, die unmittelbar ohne Zwischenschaltung eines zur Atmosphäre offenen Behälters an den Einlaß der Kolbenpumpe angeschlossen ist. Die Kolbenpumpe fördert das Druckmittel aus der Rücklaufleitung wieder in die Bremsleitung zurück, um auf diese Weise nach einem erneuten Schließen des Steuerventils den Bremsdruck am Radbremszylinder wieder zu erhöhen. Die Verbindung des Pumpenauslasses mit dem Radbremszylinder wird dabei von einem druckgesteuerten Stromregelventil gesteuert, welches bei geöffnetem Steuerventil die Druckmittelzufuhr von der Kolbenpumpe zum Radbremszylinder unterbricht oder drosselt. Ein an die Rücklaufleitung angeschlossener Niederdruckspeicher mit einem federbelasteten Kolben sorgt dafür, daß die Druckabsenkgeschwindigkeit nicht von der Fördermenge der Kolbenpumpe abhängig ist.

Bei der bekannten Bremsdruckregelvorrichtung weist die Kolbenpumpe einen Stufenkolben auf, der mit seiner im Durchmesser größeren Kolbenstufe den Arbeitsraum, der dem Kolbenende benachbart ist, von einem die im Durchmesser kleinere Kolbenstufe umgebenden Ansaugraum trennt, an den die Rücklaufleitung angeschlossen ist. Der Arbeitsraum und der Ansaugraum sind durch ein im Stufenkolben angeordnetes Einlaßventil miteinander verbindbar. Zur Antriebsseite des Stufenkolbens hin wird der Einlaßraum durch einen den Stufenkolben umgebenden Ringkolben begrenzt, der über eine Feder an einem mit dem Stufenkolben verbundenen Federteller abgestützt ist. Zwischem dem Federteller und dem Gehäuse ist eine weitere Feder angeordnet. Durch den federnd abgestützten Ringkolben erhält der Ansaugraum die Funktion eines Niederdruckspeichers, der überschüssiges Druckmittel beim Öffnen des Einlaßventils aufnimmt. Die Federn, mit denen der Ringkolben und der Stufenkolben aneinander und am Pumpengehäuse abgestützt sind, sind so ausgelegt, daß der Stufenkolben nur dann mit dem Antriebsexzenter in Wirkverbindung tritt, wenn Druckmittel in dem Ansaugraum vorhanden ist. Hierdurch wird sichergestellt, daß bei leergepumptem Ansaugraum eine weitere Druckmittelförderung durch den Stufenkolben unterbunden wird. Es kann daher nicht zu einem Unterdruck in der Rücklaufleitung und dem Ansaugraum kommen, so daß beispielsweise an der Kolbenpumpe Luft nicht in den Bremsdrucksteuerkreis eindringen kann. Bei dieser bekannten Anordnung ist von Nachteil, daß die Kolbenpumpe einen vergleichsweise hohen Bauaufwand erfordert.

Bei Hochdruckkolbenpumpen für hydraulische Anlagen ist es bekannt, wie die DE-AS 23 36 118 und die US-PS 2,845,029 zeigen, die Abdichtung des Pumpenkolbens mit einem Ringraum zu versehen, von dem ein Abflußkanal entweder zur Saugseite der Pumpe oder zum Druckmittelvorratsbehälter führt. Hierdurch soll Leckflüssigkeit abgeleitet und das Eindringen von Luft vermieden werden. Diese bekannten Hochdruckkolbenpumpen sind für die Verwendung in einer Bremsdruckregelvorrichtung nicht ohne weiteres geeignet. Ist der Abflußkanal zum Behälter zurückgeführt, so bedingt dies einen erhöhten Bauaufwand. Führt der Abflußkanal zur Saugseite, so kann das Eindringen von Luft ohne besondere Maßnahmen nicht zuverlässig vermieden werden.

Aus der EP-A-0 327 218 ist eine ABS-Bremsdruckregelvorrichtung bekannt, die sich vom Oberbegriff des Anspruchs 1 dadurch unterscheidet, daß der Radzylinder immer in Verbindung mit der Druckseite der Pumpe steht und über ein Solenoid-Ventil auch mit deren Saugseite verbunden werden kann. Weiterhin sind bei dieser bekannten Vorrichtung Ein- und Auslaßventile am Pumpengehäuse angeordnet und es ist ein Ringraum am Kolben vorgesehen, über den die Druckmittelverbindung von dem Solenoid-Ventil zur Saugseite der Pumpe führt.

Dabei ergibt sich, daß bei geschlossenem Solenoid-Ventil und in Betrieb befindlicher Pumpe ein Unterdruck auf deren Saugseite erzeugt werden kann, durch welchen ein unerwünschtes Ansaugen von Luft, beispielsweise über den Ringspalt und den Pumpenantrieb erfolgen kann.

Aus der EP-A-0 322 398 ist eine ABS-Bremsdruckregelvorrichtung mit einer Pumpe bekannt, die einen exzentergetriebenen Kolben mit im Kolben befindlichem Einlaßventil zeigt, welches über Bohrungen und einen am Kolben angebrachten Ringraum mit einer mit den Radbremsen verbundenen Rückleitung verbindbar und über ein Ventil von dieser Rückleitung abtrennbar ist.

Auch hier tritt das Problem auf, daß bei geschlossenem Ventil und üblicherweise leicht öffnendem Einlaßventil der Pumpe ein unerwünschtes Ansaugen von Luft über den Exzenterantrieb möglich ist.

Der Erfindung liegt die Aufgabe zugrunde, bei einer Bremsdruckregelvorrichtung der eingangs genannten Art, den Bauaufwand für die Kolbenpumpe zu verringern und dabei sicherzustellen, daß der Druck in der Rücklaufleitung den Atmosphärendruck nicht unterschreitet und Luft über die Kolbendichtung der Kolbenpumpe nicht eindringen kann.

Diese Aufgabe wird erfindungsgemäß dadurch gelöst, daß das Einlaßventil und das Auslaßventil der Kolbenpumpe am Pumpengehäuse angeordnet sind, daß die Druckdifferenz zum Öffnen des Einlaßventils so groß bemessen ist, daß das Einlaßventil geschlossen bleibt, wenn der Druck in der Rücklaufleitung den Atmosphärendruck unterschreitet und daß auf der dem Arbeitsraum der Kolbenpumpe abgekehrten Seite der Gleitdichtung ein den Kolben umgebender Ringraum vorgesehen ist, der gegenüber dem Getriebe abgedichtet und mit einer an das Auslaßventil der Kolbenpumpe angeschlossenen Förderleitung oder mit der Rücklaufleitung verbunden ist.

Mit der Erfindung wird eine Bremsdruckregelvorrichtung geschaffen, bei der die Kolbenpumpe kontinuierlich betrieben werden kann, ohne daß Maßnahmen erforderlich sind, die bei geschlossenem Auslaßventil für ein Abschalten der Kolbenpumpe sorgen. Ist der Niederdruckspeicher leergepumpt, so sorgt der höhere Öffnungsdruck des Einlaßventils dafür, daß der Druck in der Rücklaufleitung und gegebenenfalls der mit der Rücklaufleitung verbundenen Bremsleitung nicht unter den Atmosphärendruck absinkt, so daß ein Eindringen von Luft in die Bremsleitung und ein Zurücksaugen des Radzylinderkolbens vermieden wird. Gleichzeitig wird ein Eindringen von Luft über die Gleitdichtung des Kolbens bei geschlossenem Pumpeneinlaßventil wirksam dadurch vermieden, daß die Gleitdichtung des Kolbens auf ihrer Rückseite permanent mit Druckmedium bespült wird, so daß auch beim Unterdruck in der Arbeitskammer über den Spalt der Gleitdichtung keine Luft angesaugt werden kann. Ist der Ringraum mit der Druckseite der Pumpe verbunden, so sorgt der während einer Bremsbetätigung herrschende Überdruck für die ausreichende Füllung des Ringraums mit Druckmittel. Aber auch wenn der Ringraum mit der Saugseite der Pumpe verbunden ist, wird bei der erfindungsgemäßen Bremsschlupfregelvorrichtung durch den in der Rücklaufleitung aufrecht erhaltenen Überdruck die erforderliche Füllung des Ringraums und damit eine verläßliche Abdichtung gegen das Ansaugen von Luft durch die Pumpe gewährleistet. Die Anforderungen an die Ausbildung der Gleitdichtung werden mit der Erfindung gesenkt. Der Herstellaufwand für die Kolbenpumpe wird vor allem dadurch reduziert, daß keine baulichen Einrichtungen erforderlich sind, um die Kolbenpumpe bei leergepumptem Niederdruckspeicher abzuschalten und daß die Pumpenventile von den bewegten Pumpenteilen getrennt am Pumpengehäuse angeordnet sind. Die Verbindung des Ringraums mit der einlaßseitigen Förderleitung der Kolbenpumpe hat den Vorteil, daß die Dichtung zwischen dem Ringraum und dem Getrieberaum weniger belastet ist. Die erfindungsgemäße Ausgestaltung der Bremsdruckregelvorrichtung macht es weiterhin möglich, den Niederdruckspeicher separat von der Kolbenpumpe anzuordnen, wodurch sich beide Aggregate in ihrem Aufbau vereinfachen und die Zahl der Dichtstellen sich verringern läßt.

Der den Kolben umgebende Ringraum kann nach einem weiteren Vorschlag der Erfindung durch eine eingestochene Ringnut im Kolben oder in der Kolbenbohrung gebildet sein. Weiterhin kann vorgesehen sein, daß der Ringraum gegenüber dem Getrieberaum mit einem Dichtring aus elastomerem Werkstoff abgedichtet ist. Um Druckpulsation zu vermeiden, ist erfindungsgemäß weiterhin vorgesehen, daß das Volumen des Ringraumes durch die Hubbewegung des Kolbens nicht veränderbar ist.

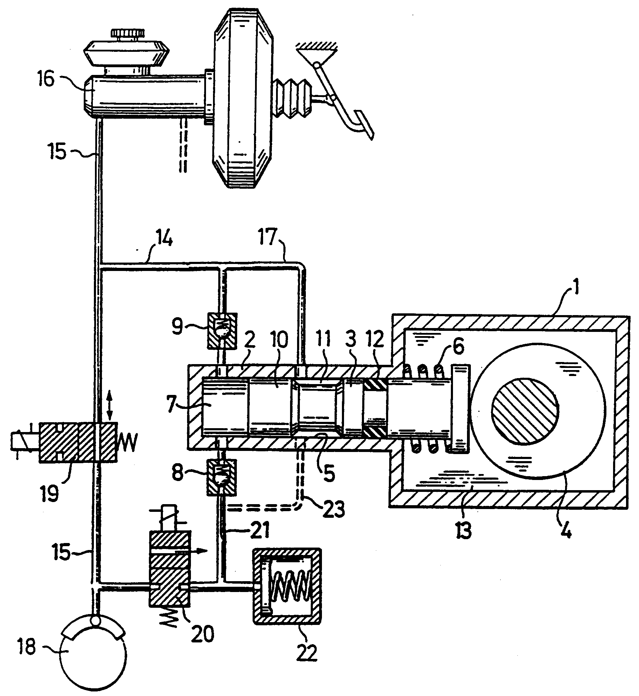

Ein Ausführungsbeispiel der Erfindung ist in der Zeichnung dargestellt und wird im folgenden näher beschrieben. Die Zeichnung zeigt eine schematische Schnittansicht einer Ausführungsform einer erfindungsgemäßen Bremsdruckregelvorrichtung für einen Bremskreis einer hydraulischen Fahrzeugbremsanlage, an den eine Kolbenpumpe angeschlossen ist.

Die dargestellte Kolbenpumpe weist ein Pumpengehäuse 1 mit einem Pumpenzylinder 2, einem Kolben 3 und einem Exzentergetriebe 4 auf. Der Kolben 3 ist in einer Kolbenbohrung 5 des Pumpenzylinders 2 axial verschiebbar gelagert und wird von einer am Gehäuse 1 abgestützten Druckfeder 6 gegen die Hubkurve des Exzentergetriebes 4 gedrückt. Der Kolben 3 begrenzt mit seiner Stirnseite einen durch das geschlossene Ende der Kolbenbohrung 5 gebildeten Arbeitsraum 7, der an ein Einlaßventil 8 und ein Auslaßventil 9 angeschlossen ist, die beide als federbelastete Rückschlagventile ausgebildet sind. Der Kolben 3 weist innerhalb der Kolbenbohrung 5 drei unterschiedlich ausgebildete Abschnitte auf. Der dem Arbeitsraum benachbarte Abschnitt 10 bildet eine Gleitdichtung, die für die erforderliche Abdichtung des Ringspalts zwischen den einander benachbarten Flächenbereichen der Kolbenbohrung 5 und des Kolbens 3 sorgt. Die Gleitdichtung kann abweichend von der Darstellung auch eine elastische Dichtung, beispielsweise in Form eines Dichtrings enthalten. Der mittlere Abschnitt des Kolbens 3 ist mit einer Ringnut versehen, durch die ein Ringraum 11 gebildet ist, dessen axiale Länge dem Kolbenhub entspricht. Der dem Exzentergetriebe 4 benachbarte Abschnitt des Kolbens 3 weist innerhalb der Kolbenbohrung 5 einen Dichtring 12 aus elastomerem Material auf, durch den der Ringraum 11 gegenüber dem das Exzentergetriebe 4 aufnehmenden Gehäuseraum 13 abgedichtet ist.

Das Auslaßventil 9 ist über eine Förderleitung 14 an eine Bremsleitung 15 eines Bremsdruckgebers 16 einer hydraulischen Fahrzeugbremsanlage angeschlossen. Über eine Leitung 17 ist auch der Ringraum 11 mit der Förderleitung 14 verbunden. An die Bremsleitung 15 ist eine Radbremse 18 angeschlossen, die über zwei Magnetventile 19, 20 steuerbar ist. Von dem Magnetventil 20 führt eine Rücklaufleitung 21 zu dem Einlaßventil 8. Die Rücklaufleitung 21 ist außerdem mit einem Niederdruckspreicher 22 verbunden. Der Öffnungsdruck des Pumpeneinlaßventils 8 ist so groß bemessen, daß der Druck in der Rücklaufleitung 21 bei laufender Kolbenpumpe nicht unter den Atmosphärendruck absinken kann.

Bei der dargestellten Fahrzeugbremsanlage sind der Bremsdruckgeber 16 und die über die Bremsleitung 15 daran angeschlossenen Aggregate mit Druckmittel gefüllt und entlüftet. Lufteinschlüsse sind unerwünscht, da sie den Volumenbedarf bei einer Bremsbetätigung erhöhen. Mit Druckmittel gefüllt sind somit auch der Arbeitsraum 7 und der Ringraum 11 der Kolbenpumpe. Bei gelöster Bremse herrscht in den mit dem Bremsdruckgeber 16 verbundenen Räumen Atmosphärendruck. In der durch das geschlossenen Magnetventil 20 von der Bremsleitung 15 getrennten Rücklaufleitung 21 herrscht der durch den Niederdruckspeicher 22 vorgegebene Druck. Der Druck im Arbeitsraum 7 kann unterschiedlich sein. Er richtet sich nach den Öffnungsdrücken des Einlaßventils 8 und des Auslaßventils 9. Ist der Druck in der Rücklaufleitung 21 niedrig, so kann im Arbeitsraum 7, beispielsweise durch Abkühlung, ein Unterdruck entstehen. Hierbei wird über den permanent mit der Förderleitung 14 in Verbindung stehenden Ringraum 11 verhindert, daß über die Gleitdichtung des Abschnitts 10 des Kolbens 3 Luft in den Arbeitsraum 7 eindringen kann.

Während eines Bremsvorgangs dient die Kolbenpumpe bei einer Regelung des Bremsdrucks an der Radbremse 18 mit Hilfe der Magnetventile 19, 20 zur Rückförderung des bei einer Bremsdruckabsenkung über das Magnetventil 20 aus dem mit der Radbremse 18 verbundenen Teil der Bremsleitung 15 abgelassenen Druckmittels in den an den Bremsdruckgeber 16 angeschlossenen Teil der Bremsleitung 15, in dem durch gleichzeitiges Schließen des Magnetventils 19 der Bremsdruck aufrechterhalten wird. Werden zu erneuten Erhöhung des Bremsdrucks an der Radbremse 18 die Magnetventile 19, 20 in die in der Zeichnung dargestellte Stellung zurückgeschaltet, so tritt beim weiteren Betrieb der Kolbenpumpe im Arbeitsraum 7 beim Saughub ein Unterdruck auf, wenn der Druck in der Rücklaufleitung 21 soweit abgesunken ist, daß das Einlaßventil 8 nicht mehr öffnet. Auch in dieser Betriebsphase sorgt das in dem Ringraum 11 durch die Verbindung zur druckseitigen Förderleitung 14 vorhandene Druckmittel da-für, daß keine Luft in das Bremssystem eindringen kann. Ein Stillsetzen der Kolbenpumpe ist daher nicht erforderlich.

Anstelle der Verbindung des Ringraums 11 über die Leitung 17 mit der auslaßseitigen Förderleitung 14 kann in einer alternativen Ausgestaltung der Ringraum 11 über eine unterbrochen dargestellte Leitung 23 an die einlaßseitige Rücklaufleitung 21 angeschlossen sein. Auch durch diese Ausgestaltung wird das Eindringen von Luft in den Arbeitsraum 7 zuverlässig vermieden, wobei der Öffnungsdruck des Einlaßventils 8 sicherstellt, daß das Saugvermögen der Kolbenpumpe nicht ausreicht, um den Druck in der Rücklaufleitung 21 unter den Atmosphärendruck abzusenken.

### Bezugszeichenliste:

- 1: Pumpengehäuse
- 2: Pumpenzylinder
- 3: Kolben
- 4: Exzentergetriebe
- 5: Kolbenbohrung
- 6: Druckfeder
- 7: Arbeitsraum
- 8: Einlaßventil
- 9: Auslaßventil
- 10: Abschnitt
- 11: Ringraum
- 12: Dichtring
- 13: Gehäuseraum
- 14: Förderleitung
- 15: Bremsleitung
- 16: Bremsdruckgeber
- 17: Leitung
- 18: Radbremse
- 19: Magnetventil
- 20: Magnetventil
- 21: Rücklaufleitung
- 22: Niederdruckspeicher
- 23: Leitung

## Patentansprüche

1. Bremsdruckregelvorrichtung für eine hydraulische Kraftfahrzeugbremsanlage mit einem Bremsdruckgeber (16), mindestens einem mit dem Bremsdruckgeber (16) über eine Bremsleitung (15) verbundenen Radbremszylinder zum Betätigen einer Radbremse (18), einem Bremsdrucksteuerkreis, der zwischen dem Bremdruckgeber (16) und dem Radbremszylinder in die Bremsleitung (15) geschaltet ist und eine Kolbenpumpe (1,2,3), deren Auslaß mit der Bremsleitung (15) verbindbar ist und Steuerventile (19,20) aufweist, die durch eine Regeleinrichtung steuerbar sind und den Radbremszylinder über eine Förderleitung (14) mit dem Auslaß der Kolbenpumpe oder mit einer zum Einlaß der Kolbenpumpe führenden Rücklaufleitung (21) verbinden, wobei ein durch ein mechanisches Exzentergetriebe (4) axial bewegbarer Kolben (3) der Kolbenpumpe mittels einer Gleitdichtung (Abschnitt 10) gegenüber der Kolbenbohrung (5) im Pumpengehäuse (1) abgedichtet ist, dadurch **gekennzeichnet**, daß das Einlaßventil (8) und das Auslaßventil (9) der Kolbenpumpe am Pumpengehäuse (1) angeordnet sind daß das Einlaßventil (8) vorgespannt ist, so daß es geschlossen bleibt, wenn der Druck in der Rücklaufleitung (21) den Atmosphärendruck unterschreitet und daß auf der dem Arbeitsraum (7) der Kolbenpumpe abgekehrten Seite der Gleitdichtung (Abschnitt 10) ein den Kolben (3) umgebender Ringraum (11) vorgesehen ist, der gegenüber dem Exzentergetriebe (4) abgedichtet und mit Druckmedium gefüllt ist.

2. Bremsdruckregelvorrichtung nach Anspruch 1, dadurch **gekennzeichnet,** daß der Ringraum (11) mit einer an das Auslaßventil (9) angeschlossenen Förderleitung (14) verbunden ist.

3. Bremsdruckregelvorrichtung nach Anspruch 1, dadurch **gekennzeichnet,** daß der Ringraum (11) mit der Rücklaufleitung (21) verbunden ist.

4. Bremsdruckregelvorrichtung nach einem der Ansprüche 1 bis 3, dadurch **gekennzeichnet,** daß die im Abschnitt (10) befindliche Gleitdichtung als Spaltdichtung ausgebildet ist.

5. Bremsdruckregelvorrichtung nach einem der vorhergehenden Ansprüche, dadurch **gekennzeichnet,** daß der Ringraum (11) durch eine Ringnut im Kolben (3) oder in der Kolbenbohrung (5) gebildet ist.

6. Bremsdruckregelvorrichtung nach einem der vorhergehenden Ansprüche, dadurch **gekennzeichnet,** daß der Ringraum (11) gegenüber dem Exzentergetriebe (4) mit einem Dichtring (12) aus elastomerem Werkstoff abgedichtet ist.

7. Bremsdruckregelvorrichtung nach einem der vorhergehenden Ansprüche, dadurch **gekennzeichnet,** daß das Volumen des Ringraums (11) durch die Hubbewegung des Kolbens (3) nicht veränderbar ist.

## Claims

1. A braking pressure control device for a hydraulic automotive vehicle brake system comprising a braking pressure generator (16), at least one wheel brake cylinder connected by way of a brake line (15) with the braking pressure generator (16) to actuate a wheel brake (18), a braking pressure control circuit which is interposed in the brake line (15) between the braking pressure generator (16) and the wheel brake cylinder, and a piston pump (1, 2, 3), the outlet of which is connectible to the brake line (15), and having control valves (19, 20) which are controllable by a control device and connect the wheel brake cylinder with the outlet of the piston pump by way of a supply line (14) or with a return line (21) leading to the inlet of the piston pump, with a piston (3) of the piston pump that is axially movable by a mechanical eccentric drive (4) being sealed in relation to the piston bore (5) in the pump housing (1) by means of a slide seal (section 10),
**characterized** in that the inlet valve (8) and the outlet valve (9) of the piston pump are arranged on the pump housing (1), in that the inlet valve (8) is preloaded so that it remains closed if the pressure in the return line (21) falls below atmospheric pressure, and in that an annular chamber (11) encircling the piston (3) is provided on the side of the slide seal (section 10) remote from the working chamber (7) of the piston pump, the annular chamber being sealed in relation to the eccentric drive (4) and being filled with pressure fluid.

2. A braking pressure control device as claimed in claim 1,
**characterized** in that the annular chamber (11) is connected to a supply line (14) communicating with the outlet valve (9).

3. A braking pressure control device as claimed in claim 1,
**characterized** in that the annular chamber (11) is connected to the return line (21).

4. A braking pressure control device as claimed in any one of claims 1 to 3,
**characterized** in that the slide seal arranged in the section (10) is a slot seal.

5. A braking pressure control device as claimed in any one of the preceding claims,
**characterized** in that the annular chamber (11) is formed by an annular groove in the piston (3) or in the piston bore (5).

6. A braking pressure control device as claimed in any one of the preceding claims,
**characterized** in that the annular chamber (11) is sealed in relation to the eccentric drive (4) by a sealing ring (12) made of an elastomeric material.

7. A braking pressure control device as claimed in any one of the preceding claims,
**characterized** in that the volume of the annular chamber (11) is not variable by the stroke movement of the piston (3).

## Revendications

1. Régulateur de pression de freinage pour un système hydraulique de freinage de véhicule à moteur, comprenant un transmetteur pression de freinage (16), au moins un cylindre de frein de roue relié au transmetteur de pression de freinage (16) par une conduite de frein (15) et actionnant un frein de roue (18), un circuit de commande de pression de freinage, qui est connecté dans la conduite de frein (15) entre le transmetteur de pression de freinage (16) et le cylindre de frein de roue, et une pompe à piston (1, 2, 3), dont la sortie peut être reliée à la conduite de frein (15) et qui présente des valves de commande (19, 20) qui peuvent être asservies par un dispositif de régulation et qui relient le cylindre de frein de roue à la sortie de la pompe à piston par l'intermédiaire d'une conduite de refoulement (14) ou à une conduite de retour (21) menant à l'entrée de la pompe à piston, un piston (3) de la pompe à piston, pouvant être déplacé axialement par un mécanisme de transmission à excentrique (4), étant étanché vis-à-vis de l'alésage de piston (5) dans le carter de pompe (1) au moyen d'un joint glissant (partie de piston 10), **caractérisé** en ce que la soupape d'entrée (8) et la soupape de sortie (9) de la pompe à piston sont disposées sur le carter de pompe (1), en ce que la soupape d'entrée (8) est précontrainte, de sorte qu'elle reste fermée si la pression dans la conduite de retour (21) devient inférieure à la pression atmosphérique, et en ce qu'est prévue, sur le côté du joint glissant (partie de piston 10) qui est opposé à la chambre de travail (7) de la pompe à piston, une chambre annulaire (11) entourant le piston (3), qui est étanchée vis-à-vis de la transmission à excentrique (4) et remplie de fluide hydraulique.

2. Régulateur de pression de freinage selon la revendication 1, **caractérisé** en ce que la chambre annulaire (11) est reliée à une conduite de refoulement (14) raccordée à la soupape de sortie (9).

3. Régulateur de pression de freinage selon la revendication 1, **caractérisé** en ce que la chambre annulaire (11) est reliée à la conduite de retour (21).

4. Régulateur de pression de freinage selon l'une quelconque des revendications 1 à 3, **caractérisé** en ce que le joint glissant qui se trouve sur la partie de piston (10) est conçu comme joint à labyrinthe.

5. Régulateur de pression de freinage selon l'une quelconque des revendications précédentes, **caractérisé** en ce que la chambre annulaire (11) est formée par une rainure annulaire dans le piston (3) ou dans l'alésage de piston (5).

6. Régulateur de pression de freinage selon l'une quelconque des revendications précédentes, **caractérisé** en ce que la chambre annulaire (11) est étanchée vis-à-vis de la transmission à excentrique (4) par une bague d'étanchéité (12) en matériau élastomère.

7. Régulateur de pression de freinage selon l'une quelconque des revendications précédentes, **caractérisé** en ce que le volume de la chambre annulaire (11) ne peut pas être modifié par le déplacement du piston (3).
